(19) Europäisches Patentamt
European Patent Office
Office européen des brevets

(11) **EP 2 547 057 A1**

(12) **EUROPEAN PATENT APPLICATION**

(43) Date of publication:
**16.01.2013 Bulletin 2013/03**

(51) Int Cl.:
***H04L 27/00*** *(2006.01)*      ***H04L 27/18*** *(2006.01)*
***H04L 27/38*** *(2006.01)*

(21) Application number: **11174261.5**

(22) Date of filing: **15.07.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ST-Ericsson SA
1228 Plan-les-Ouates (CH)**

(72) Inventor: **Paker, Özgün
5612 DH Eindhoven (NL)**

(74) Representative: **Hirsch & Associés
58, avenue Marceau
75008 Paris (FR)**

Remarks:
Amended claims in accordance with Rule 137(2)
EPC.

(54) **A method for demodulating the HT-SIG field used in WLAN standard**

(57)    A method for demodulating a signal modulated with a first phase modulation technique with a demodulator adapted to demodulate signals modulated with a second phase modulation technique, the first phase modulation technique being based on a first phase constellation diagram and the second phase modulation technique being based on a second phase constellation diagram, the second phase constellation diagram being obtained by rotating the first phase constellation diagram by an angle being a non-nul integer multiple of 90 degrees, the method comprising:
a) rotating the signal modulated with the first phase modulation technique by said angle; and
b) demodulating the rotated signal with the demodulator.
The method enables to use former optimized demodulator.

## SISO mode processing of HT-SIG

Fig.13

**Description**

FIELD OF THE INVENTION

The invention relates to a method for demodulating a signal modulated with a first phase modulation technique with a demodulator adapted to demodulate signals modulated with a second modulation technique. The invention also concerns a radio-frequency receiver adapted to carry out the method and a computer program comprising instructions for performing the method.

BACKGROUND OF THE INVENTION

The multiple-input-multiple-output (also named after its acronym MIMO) is a technique used in a wireless communication network. According to this procedure, the original data stream to be sent is broken up into multiple streams and transmitted from different antennas at the same time in the same frequency band. This enables to provide a high spectral efficiency to the wireless communication network in which MIMO is used. The spectral efficiency is generally expressed in bps/Hz and refers to the information rate that can be transmitted over a given bandwidth in a communication system. Such property explains why MIMO technology is usually considered in many standards, when high data rate modes (from 100 Mbps to 1Gbps) are desired. LTE (acronym for "Long Term Evolution"), LTE-Advanced (acronym for "Long Term Evolution" Advanced), WLAN (acronym for "Wireless Local Area Network") and WiMax (acronym for "Worldwide Interoperability for Microwave Access") are examples of such standards implying the use of MIMO.
The high spectral efficiency is obtained in case the reception side can bear the additional burden of separating the streams from each other. This requirement comes from that the intentional interference caused in MIMO technology by the transmission of independent data streams at the same time in the same frequency band. The separation of streams is usually carried out with an equalizer and a demapper. The equalizer is an apparatus designed to compensate over a certain frequency range the amplitude/frequency distortion or the phase frequency distortion introduced by lines or equipment. The demapper involves calculation of LLR as further detailed below. Hence, the performance on the receiver side is significantly linked with the efficiency of the combination of the equalizer and the demapper. As the combination of the equalizer and the demapper is generally included in a demodulator, it is desired to be able to design demodulators with good performance.
Several equalizers are known. Linear equalizers are simple to implement even in software on a programmable vector machine. MMSE (acronym for "Minimum mean square error") or ZF (acronym for "zero-forcing") are examples of such equalizers. However, their algorithmic performance is not as high as for other kinds of equalizer.
For instance, ML (acronym for "maximum-likelihood") detectors perform optimal/near-optimal in terms of BER (acronym for "bit-error rate") in function of SNR (acronym for "signal-to-noise ratio"). In other words, ML detectors ensure that for a given signal-to-noise ratio, the bit-error rate is optimal. The ML technique, at least if naively implemented, is a brute-force approach. Therefore, for high-order modulation schemes, such approach is not practical to implement. 16-QAM (acronym for "Quadrature amplitude modulation") and 64-QAM are examples of such high-order modulation schemes.
The demodulator may also use a variant of sphere-decoding or M-algorithm. A Sphere-decoding demodulator is a ML decoder for arbitrary lattice constellations. Such demodulator enables to solve the so-called "closest lattice point problem". In other words, this demodulator finds the closest lattice point to a given received point. At the basis of the Sphere-decoding is the Finke-Pohst algorithm which enumerates all lattice points within a sphere centered at the origin. Such demodulator enables to obtain good performance for certain well-known signal constellations. However, such demodulator is not able to support all the signal constellations.

SUMMARY OF THE INVENTION

The object of the present invention is to alleviate at least partly the above mentioned drawbacks.
More particularly, the invention aims to demodulating a signal modulated with a first phase modulation technique with a demodulator adapted to demodulate a signal modulated with a second modulation technique. The number of signal constellations the demodulator can support is thus enlarged.
This object is achieved with a method for demodulating a signal modulated with a first phase modulation technique with a demodulator adapted to demodulate signals modulated with a second phase modulation technique. The first phase modulation technique is based on a first phase constellation diagram and the second phase modulation technique being based on a second phase constellation diagram, the second phase constellation diagram being obtained by rotating the first phase constellation diagram by an angle being a non-nul integer multiple of 90 degrees. The method comprises a step a) of rotating the signal modulated with the first phase modulation technique by said angle and a step b) of demodulating the rotated signal with the demodulator.

Preferred embodiments comprise one or more of the following features:

- the method further comprises a step i) of receiving a signal to be demodulated , a step ii) of verifying whether the signal is modulated with the first phase modulation technique and step iii) of applying steps a) and b) on the signal if the verification in step ii) is positive.
- the method further comprises a step of iv) applying step b) on the signal if the verification in step ii) is negative.
- the demodulator operates in MIMO mode and the method further comprises the step of receiving the signal modulated with a first modulation technique at a single antenna, sending the received signal from the single antenna to a processing unit and converting the rotated signal in MIMO mode at the processing unit.
- the converting step comprises buffering the signal and the demodulating step is achieved based on a diagonal matrix as effective channel between the transmitted signal and the received signal.
- the demodulator operates in MIMO mode and the method further comprises the steps of receiving the signal modulated with a first modulation technique at a plurality of antennas, combining the received signal over the plurality of antennas at a pre-processing unit, sending the combined signal from the pre-processing unit to a processing unit and converting the rotated signal in MIMO mode to the processing unit.
- the combining step is achieved by using the maximum-ratio combining method or the receive diversity method.
- the first modulation technique is Q-BPSK and the second modulation technique is I-BPSK.
- the rotating step is carried out by multiplying by -i.
- the signal is the HT-SIG field as defined according to the standard 802.11n for WLAN communication.

It is also proposed a computer program product comprising a computer readable medium, having thereon a computer program comprising program instructions, the computer program being loadable into a data-processing unit and adapted to cause execution of the method as previously described when the computer program is run by the data-processing unit.

It is also proposed a radio-frequency receiver comprising antennas for receiving signals modulated in a first or a second phase modulation, the first phase modulation technique being based on a first phase constellation diagram and the second phase modulation technique being based on a second phase constellation diagram, the second phase constellation diagram being obtained by rotating the first phase constellation diagram by an angle being a non-nul integer multiple of 90 degrees. The radio-frequency receiver further comprises a demodulator adapted to demodulate signals modulated with a second phase modulation technique and a processing unit linked to the demodulator for rotating a signal modulated with the first phase modulation technique by said angle.

In another embodiment, the radio-frequency receiver may further comprise a detector unit is adapted to detect if the signal is modulated with the first or the second phase modulation. The receiver also comprises a demultiplexer for separating the signal according to the modulation detected by the detector unit, the demultiplexer sending the signal to the processing unit in case the signal is modulated with the first phase modulation and to the demodulator in case the signal is modulated with the second phase modulation.

According to another embodiment, the processing unit of the radio-frequency receiver is adapted to carry out the method according to any one of claims 1 to 10.

Further features and advantages of the invention will appear from the following description of embodiments of the invention, given as non-limiting examples, with reference to the accompanying drawings listed hereunder.

BRIEF DESCRIPTION OF THE DRAWINGS

Fig. 1 to 4 shows constellation diagrams for several kind of phase modulation,
Fig. 5 shows a schematic representation of three packet formats used in WLAN (802.11n) standard,
Fig. 6 shows constellation diagrams for L-SIG and HT-SIG,
Fig. 7 shows a block-diagram illustrating the role of the sphere decoder in MIMO mode,
Fig. 8 and 9 show QPSK signal constellation diagram for illustrating LLR calculations,
Fig. 10 shows a schematic view of a sphere decoder,
Fig. 11, 12 and 14 shows different Flowcharts of carrying out of the method according to different embodiments of the invention,
Fig. 13 shows a block diagram of a RF receiver in case the signal is transmitted in SISO mode,
Fig. 15 shows a block diagram of a RF receiver in case the signal is transmitted in SIMO mode,
Fig. 16 shows another block diagram of a RF receiver in case the signal is transmitted in SIMO mode.

DETAILED DESCRIPTION OF THE INVENTION

A method for demodulating a signal modulated with a first phase modulation technique with a demodulator adapted to demodulate signals modulated with a second modulation technique is proposed.

The first phase modulation technique is based on a first phase constellation diagram and the second phase modulation technique is based on a second phase constellation diagram, the second phase constellation diagram being obtained by rotating the first phase constellation diagram by an angle being a non-nul integer multiple of 90 degrees.

A constellation diagram is a representation of a signal modulated by a digital modulation scheme such as quadrature amplitude modulation (QAM) or phase-shift keying (PSK). It displays the signal as a two-dimensional scatter diagram in the complex plane at symbol sampling instants. In a more abstract sense, it represents the possible symbols that may be selected by a given modulation scheme as points in the complex plane. Measured constellation diagrams can be used to recognize the type of interference and distortion in a signal. As the symbols are represented as complex numbers, they can be visualized as points on the complex plane. The real and imaginary axes are termed the in-phase or I-axis and quadrature axes or Q-axis respectively due to their 90° separation.

Plotting several symbols in a scatter diagram produces the constellation diagram. The points on a constellation diagram are called constellation points. Such a representation on perpendicular axes lends itself to straightforward implementation. The amplitude of each point along the in-phase axis is used to modulate a cosine (or sine) wave and the amplitude along the quadrature axis to modulate a sine (or cosine) wave.

As specific examples of modulation techniques, PSK modulation techniques will be detailed further below. PSK, QBPSK and BPSK belong to the group of Phase-shift keying (PSK) digital modulation scheme. Such scheme conveys data by changing, or modulating, the phase of a reference signal (the carrier wave).

Any digital modulation scheme uses a finite number of distinct signals to represent digital data. PSK uses a finite number of phases, each assigned a unique pattern of binary digits. Usually, each phase encodes an equal number of bits. Each pattern of bits forms the symbol that is represented by the particular phase.

As explained before, a convenient way to represent PSK schemes is on a constellation diagram. In PSK, the constellation points chosen are usually positioned with uniform angular spacing around a circle. This gives maximum phase-separation between adjacent points and thus the best immunity to corruption. Such location of the constellation points on a circle enables a transmission with the same energy for each point. In this way, the moduli of the complex numbers these constellation points represent are the same. This results in the fact that the amplitudes required for the cosine and sine waves at the transmitted side will be the same.

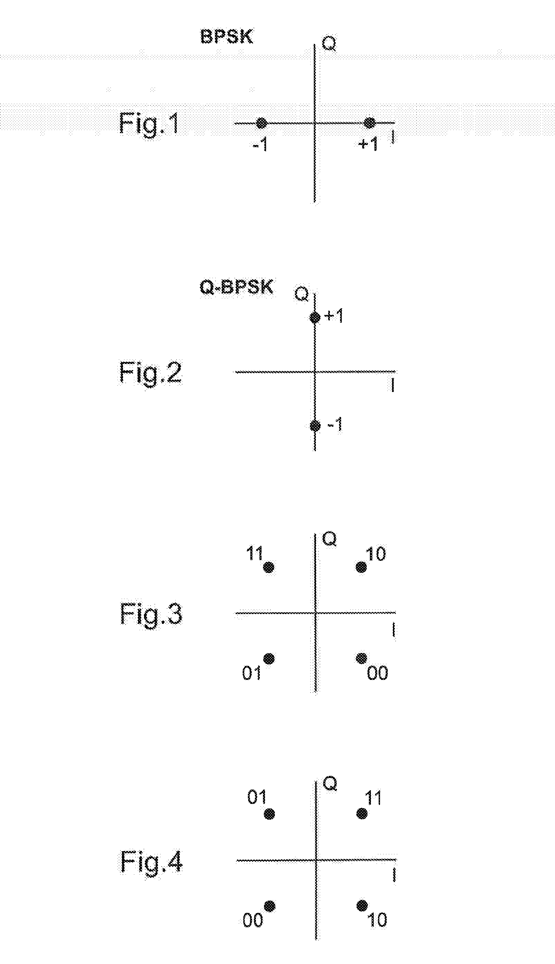

Figures 1 to 4 are illustrations of constellation diagrams for several PSK techniques. Figures 1 and 2 represent the constellation diagram of the PSK technique called "binary phase-shift keying" (BPSK). This technique is also sometimes called PRK for "phase reversal keying" or 2PSK for "2 phase-shift keying". This is the simplest form of phase shift keying. In the figure 1, the constellation points are positioned on the real axis, at 0° and 180°. In the remainder of the description, such technique of modulation will be noted I-BPSK. In the figure 2, the constellation points are positioned on the imaginary axis, at 90° and -90°. In the remainder of the description, such technique of modulation will be noted Q-BPSK. The binary modulation is most robust than the other PSK techniques since it takes the highest level of noise or distortion to make the demodulator reach an incorrect decision. I-BPSK and Q-BPSK are specific examples of modulation techniques wherein the constellation diagram of one technique can be obtained from the other constellation diagram by a rotation of 90°.

Figure 3 shows higher order constellation diagrams for quadrature phase-shift keying PSK techniques. This modulation technique uses four phases. Should the QPSK technique be considered as the first technique, the Figure 4 illustrates the constellation diagram of the second modulation technique according to the invention.

The demodulator, which is designed specifically for the symbol-set used by the modulator, determines the phase of the received signal and maps it back to the symbol it represents, thus recovering the original data.

Therefore, in the specific case of I-BPSK and Q-BPSK, a demodulator adapted to demodulate a signal modulated with the I-BPSK modulation technique is generally not able to demodulate a signal modulated with the Q-BPSK modulation technique. This problem notably arises if one wants to adapt the demodulator used for WLAN according to a standard anterior to 802.11n to the signals as defined according to the standard 802.11n for WLAN communication.

Indeed, the WLAN (802.11n) standard (see for instance IEEE P802.11n "Draft standard for Information technology Telecommunications and information exchange between systems - Local and metropolitan area networks - Specific requirements Part 11: Wireless LAN Medium Access Control (MAC) and Physical Layer (PHY) specifications) employs in two packet formats an HT-SIG field for conveying information to the receiver. HT-SIG stands for High-throughput signal and the properties of such signal will be detailed in the following.

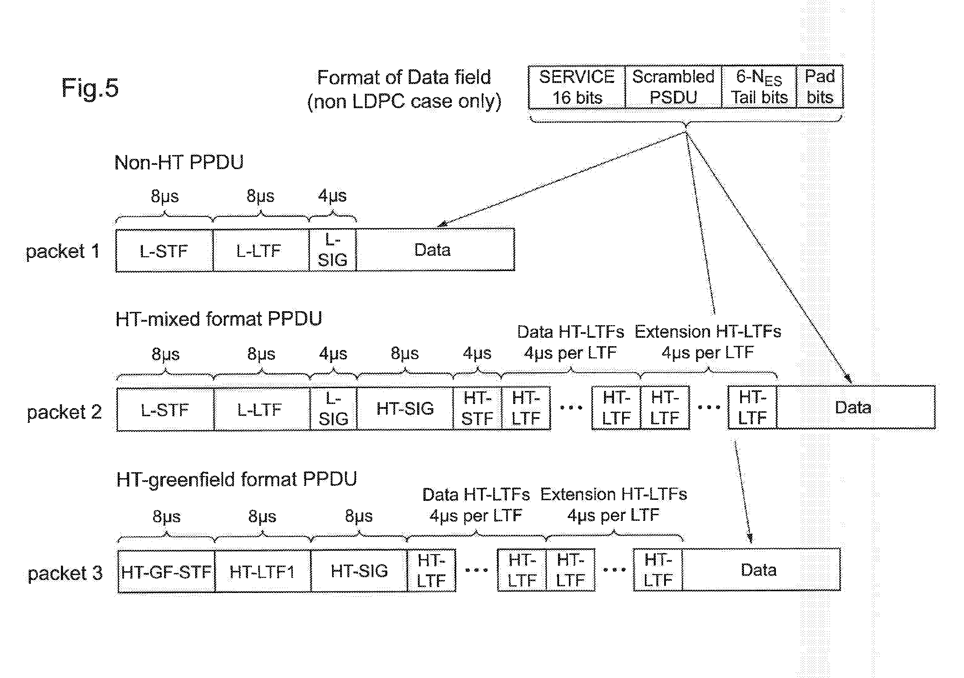

According to WLAN (802.11n) standard, for the HT (High-throughput) mode, a signal field called HT-SIG is added the to the legacy format to determine the modulation and coding scheme of the transmitted MIMO signal. To illustrate this, Figure 5 is a schematic representation of three packet formats used in WLAN (802.11n) standard. The three packets are respectively labelled packets 1, 2 and 3. Packet 1 corresponds to a non-HT PPDU (PPDU is an acronym for "protocol data unit"). Packet 2 is a HT-mixed format PPDU and packet 3 is a HT-greenfield format PPDU.

Both packets 2 and 3 comprise an HT-SIG field. This HT-SIG field provides the receiver with information intended to enable proper decoding of the high-throughput payload (data field) that succeeds the preamble as shown in Figure 5. This HT-SIG field may concern specific area such as the modulation scheme or the MIMO configuration.

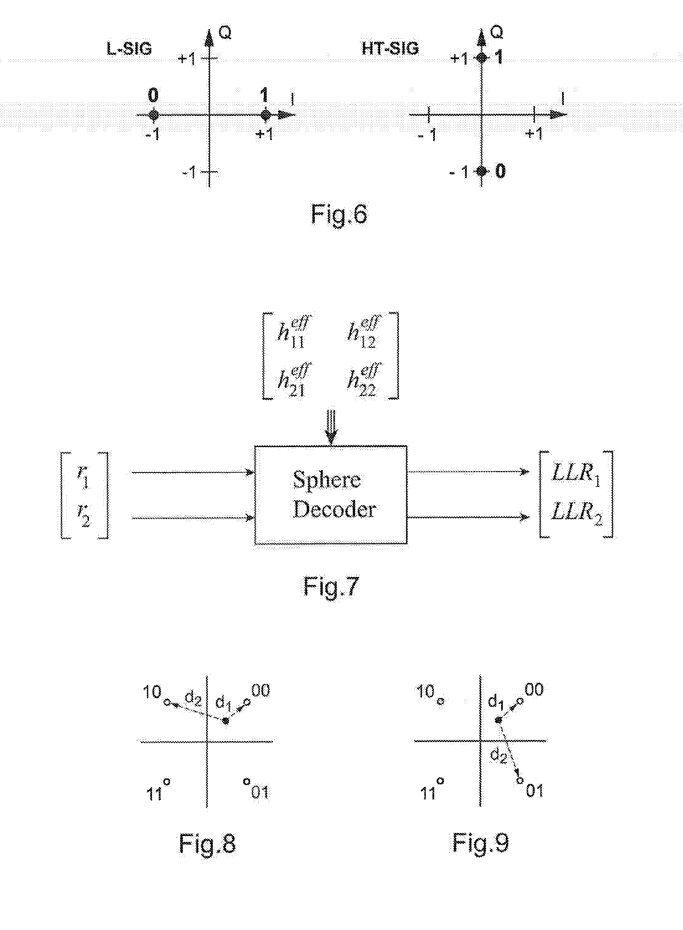

The HT-SIG field is encoded using the Q-BPSK modulation technique and a coding rate of 0.5. The HT-SIG field is thus modulated with Q-BPSK whereas the other data is modulated with I-BPSK. This difference is illustrated by Figure 6 wherein data tone constellations in an HT-mixed format PPDU (packet 2) is represented. The L-SIG (for "Legacy Field Signal") is modulated using the I-BPSK technique whereas the HT-SIG is modulated using the Q-BPSK technique.

Therefore, a demodulator adapted to demodulate the L-SIG is generally not able to demodulate HT-SIG. Demodulator used for WLAN according to a standard anterior to 802.11n may present such drawback in so far as the Q-BPSK technique was not used with the I-BPSK technique for modulating the data. As a non-limitative example of demodulator, a sphere decoder will be further detailed.

Such sphere decoder may operate in MIMO mode as illustrated schematically on Figure 7. Figure 7 is a block-diagram illustrating the role of the sphere decoder in MIMO mode. The MIMO transmission model is given by the following equation:

$$r = H_{eff} \times S + n \quad \text{(equation 1)}$$

wherein:

- $r$ is the received signal vector (the size of this vector is $N_{RX}$ by 1, $N_{RX}$ denoting the number of receiving antennas),
- $H_{eff}$ stands for the effective channel seen between the transmitted signal and received signal that is to be equalized and demapped,
- $s$ is the transmitted signal vector (the size of this vector is $N_{TX}$ by 1, $N_{TX}$ denoting the number of transmitting antennas),
- $n$ is the noise at each receive antenna (the size of this vector is $N_{RX}$ by 1).

In the specific case of Figure 7, the number of receiving antennas $N_{RX}$ and the number of transmitting antennas $N_{TX}$ is equal to 2. It is indeed the easiest illustration of MIMO transmission that can be found. In this specific case, this means for that r, $H_{eff}$ and s may be written mathematically as:

$$r = \begin{bmatrix} r_1 \\ r_2 \end{bmatrix} \quad \text{(equation 2)}$$

$$H_{eff} = \begin{bmatrix} h_{11}^{eff} & h_{12}^{eff} \\ h_{21}^{eff} & h_{22}^{eff} \end{bmatrix} \quad \text{(equation 3)}$$

$$s = \begin{bmatrix} s_1 \\ s_2 \end{bmatrix} \quad \text{(equation 4)}$$

wherein:

- $r_1$ corresponds to the signal received at the first receiving antenna,
- $r_2$ corresponds to the signal received at the second receiving antenna,
- $h_{11}^{eff}$, $h_{12}^{eff}$, $h_{21}^{eff}$ and $h_{22}^{eff}$ correspond to the different coefficients of the matrix H,
- $s_1$ corresponds to the signal emitted by the first transmitting antenna,
- $s_2$ corresponds to the signal emitted by the second transmitting antenna.

In the remainder of the description, for the sake of clarity, MIMO mode will be illustrated by such example, be it understood that any number of receiving antennas $N_{RX}$ superior to 2 and any number of transmitting antennas $N_{TX}$ superior to 2 may be used. Moreover, the MIMO transmission is illustrated in the case of spatial multiplexing with two spatial layers.

The sphere decoder is provided with information on the effective channel comprising the elements of the matrix $H_{eff}$ and with the modulation scheme. The modulation scheme usually includes the signal constellation. When receiving the received signal vector r, the sphere decoder is able to calculate softbits per each spatial layer transmitted.

The calculation of softbits and their physical meaning may be better understood when contemplating the examples of Figures 8 and 9. Figures 8 and 9 show a QPSK signal constellation diagram. In case an equalized signal is received, the equalized signal is symbolized may be represented by a black dot on the constellation diagram. In case of QPSK, the signal carries two bits (see notably Figure 3) and for each bit, the value should be determined.

As explained on Figures 8 and 9 respectively for the first and for the second bit, the value of the bit is determined based on the minimum distance with relation to the constellation points coding for a "1" or a "0". More precisely, by reference to Figure 8, $d_1$ shows the distance to the closest constellation point with a logic "0" for the first bit and $d_2$ shows the distance to the closest constellation point that has a logic "1". Similar notations are used for Figure 9.

Softbits are calculated using the distance $d_1$ and $d_2$ and can be expressed as:

$$LLR_i \approx \frac{1}{\sigma^2}\left(d_1 - d_2\right) \qquad \text{(equation 5)}$$

wherein:

- LLR (acronym for "log-likelihood ratio") corresponds to the notation of softbits,
- $\sigma^2$ corresponds to the variance per complex dimension of the noise.

Softbits are also called LLR since they are a measure on the likelihood of the bit value. The sphere decoder therefore enables to obtain the softbit values. This results in the fact that the sphere decoder can demodulate the signal r received to obtain the original signal s.

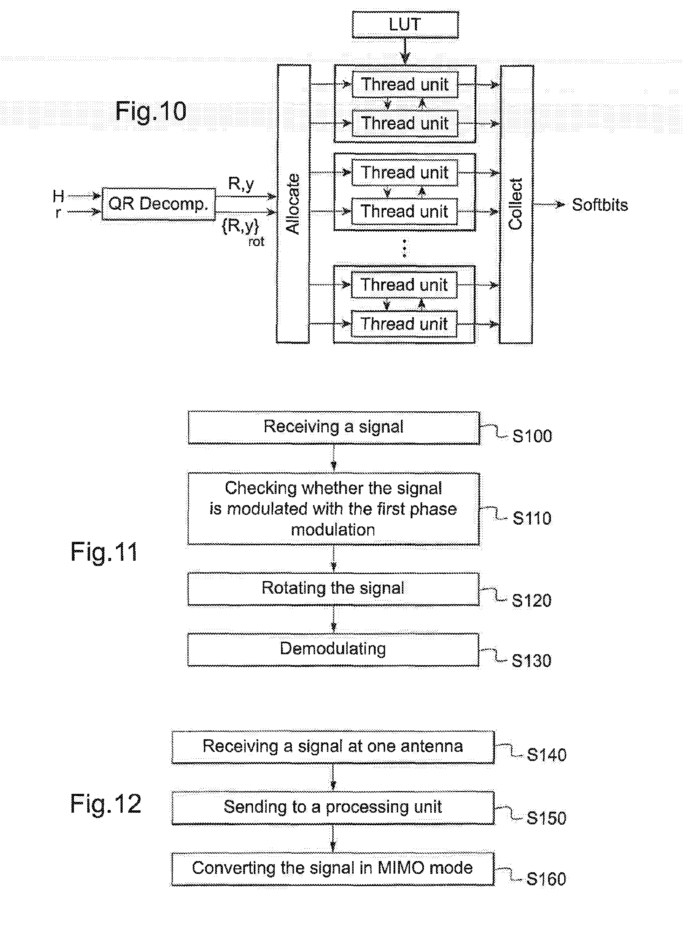

Figure 10 is a schematic view of a sphere decoder. Such decoder comprises several modules used for the steps of equalizing and demapping of MIMO streams. According to the specific architecture of Figure 10, the decoder comprises a pre-processing module in which a QR decomposition is carried out. In linear algebra, a QR decomposition (also called a QR factorization) of a matrix is a decomposition of the matrix into an orthogonal and an upper triangular matrix. The decoder also comprises parallel computational blocks named as "Thread units". These blocks are provided with data by a module named "allocate" and are responsible for calculation of softbits. The results of the calculation of each block is collected by a module named "collect" which distribute the softbits at the output of the sphere decoder. The decoder further comprises a look-up-table (often named after the acronym LUT) for enumerating QAM (acronym for "Quadrature amplitude modulation") symbols in the order of processing during the search process.

Such kind of demodulator is usually not able to support a first phase modulation technique, the first phase modulation technique being based on a first phase constellation diagram and the second phase modulation technique being based on a second phase constellation diagram, the second phase constellation diagram being obtained by rotating the first phase constellation diagram by an angle being a non-nul integer multiple of 90 degrees

However, it is still desirable to properly detect and carry out a demapping step of the HT-SIG field in the WLAN (802.11n) standard.

For this, the method for demodulating a signal modulated with a first modulation technique by a demodulator adapted to demodulate at least a second modulation technique is proposed.

Such method may be carried out according to the Flowchart of Figure 11. The method comprises a step S 100 of receiving a signal to be demodulated. The method further comprises verifying whether the signal is modulated with the first phase modulation technique. In case of I-BPSK and Q-BPSK, the detection may be achieved by simply verifying the signal power of the relevant I or Q channel. Such detection is an easy way to determine which kind of signal is sent.

In case the verification is positive, the method encompasses a step S120 of rotating the signal by the integer multiples of degrees until the rotated signal obtained be modulated with the second modulation technique. It can be noticed that this rotating step of the signal encoded with the first modulation technique is achieved without modifying the noise power.

In case of I-BPSK and Q-BPSK, the rotating step is carried out by multiplying by -i. A multiplication of the signal encoded with Q-BPSK by the imaginary number - i which can also be noted - $\sqrt{-1}$ enables to obtain a I-BPSK signal based on a signal encoded with Q-BPSK constellation.

As explanation of this fact, let assume an example with an AWGN SISO channel. An additive white gaussian noise (also named after its acronym "AWGN") channel is a channel model in which the only impairment to communication is a linear addition of wideband or white noise with a constant spectral density and a Gaussian distribution of amplitude.

This AWGN SISO channel is used to transmit a Q-BPSK signal labelled $S_{Q-BPSK}$. $S_{Q-BPSK}$ is either - i or i, which represents a logic number "0" of "1" respectively in the Q-BPSK signal constellation. The received signal can be expressed as in equation 6:

$$r = H \times S_{Q-BPSK} + n \qquad \text{(equation 6)}$$

wherein:

- r is the received signal vector,
- H stands for the effective channel seen between the transmitted signal and received signal that is to be equalized and demapped,
- n corresponds to the noise generated in the Q channel (due to the simple fact that the signal is sent on the Q channel and not the I channel).

Based on Figures 1 and 2, it can be realized the relation between a I-BPSK signal named $S_{I-BPSK}$ and the $S_{Q-BPSK}$ signal as the equation (7) which reads:

$$S_{I-BPSK} = -i \times S_{Q-BPSK} \qquad \text{(equation 7)}$$

By multiplying each terms of the equation 6 with - i and using the equation 7, it can be obtained an equation 8, which reads:

$$- i \times r = H \times S_{I-BPSK} + n \qquad \text{(equation 8)}$$

Thus, equation 8 shows that multiplying the received signal with -i is equivalent to transmitting the I-BPSK signal $S_{I-BPSK}$ without modifying the contribution of the noise power. No change to the noise power implies that the demapper will obtain the same result when carrying out the softbit calculations.

Implementing a step wherein the received signal is multiplied by an imaginary number - i to obtain the rotated signal is relatively easy. Indeed, in this mode, the imaginary part of the received complex signal becomes the real part of the rotated signal, whereas the real part of the received complex signal is first negated and then becomes the imaginary part of the rotated signal. As example, should the received signal be represented in complex by a + ib, the rotated signal is b - ia. In terms of hardware components, only a negation unit may be used to implement such converting step. Such negation unit can, for instance, in two's complement notation, implement an inversion of the bits of the operand and adding 1 to the LSB.

Thus, at this step of S 120 of rotating, a signal which can be demodulated by the demodulator is obtained although the demodulator is not able to demodulate the signal as directly received. The steps S110 of detecting and S120 of rotating can be construed as pre-processing steps enabling the demodulation.

The method then comprises a step S130 of demodulating the rotated signal. A demodulated signal is thus obtained. In addition, the properties of the demodulator for a signal coded with the second technique are kept. Notably, if the demodulator has an optimal performance in term of SNR and BER for the second technique, the method enables to demodulate the signal modulated with the same properties.

This implies a maximum re-use of the current device for communications. No substantial modification should be made to a traditional RF receiver. The addition of a processing unit is sufficient to carry out the method. Therefore, verification and design efforts are minimized. Indeed, should one have considered modifying a demodulator, conversion in MIMO mode is required and several modules should be modified in the sphere decoder. This results in an increased area which can be estimated between 5 and 10 KGates for the case of WLAN communication. The method proposed enables to avoid such increase of the area.

Furthermore, by using such method, a separate detector is not involved for demodulating the signal modulated with the first modulation technique. Indeed, if it is considered to use a demodulator which is not able to demodulate Q-BPSK, an easy solution would be to use an existing detector just for equalization and demapping of this field. But this would mean that this extra hardware would be sitting idle when processing the other fields of the packet and this would result in an inefficient additional silicon cost for the receiver. This also results in area saving, which can be estimated as a gain of 50 to 100 Kgates.

The method for demodulating has been specifically illustrated for I-BSPK and Q-PBPSK. However, it should be understood that the same step can also be carried out for a non BPSK constellation which involves noise components for both the I and Q channels provided the property of not effecting noise power is maintained. This enables to maintain the algorithmic performance of the detector.

Further adaptation of the signal may be required, notably if the signal modulated with the first modulation technique is not transmitted in MIMO mode whereas the demodulator operates in MIMO mode.

In the case where the transmission of mode for the signal is a SISO (acronym for "Single Input Single Output") or a MISO (acronym for "Multiple Input Single Output"), the method for demodulating is the method according to Flowchart of Figure 12 comprises the step S140 of receiving the signal modulated with a first modulation technique at a single antenna. The method then comprises a step S 150 of sending the received signal from the single antenna to a processing unit. This processing unit is the unit in which the rotating step is carried out.

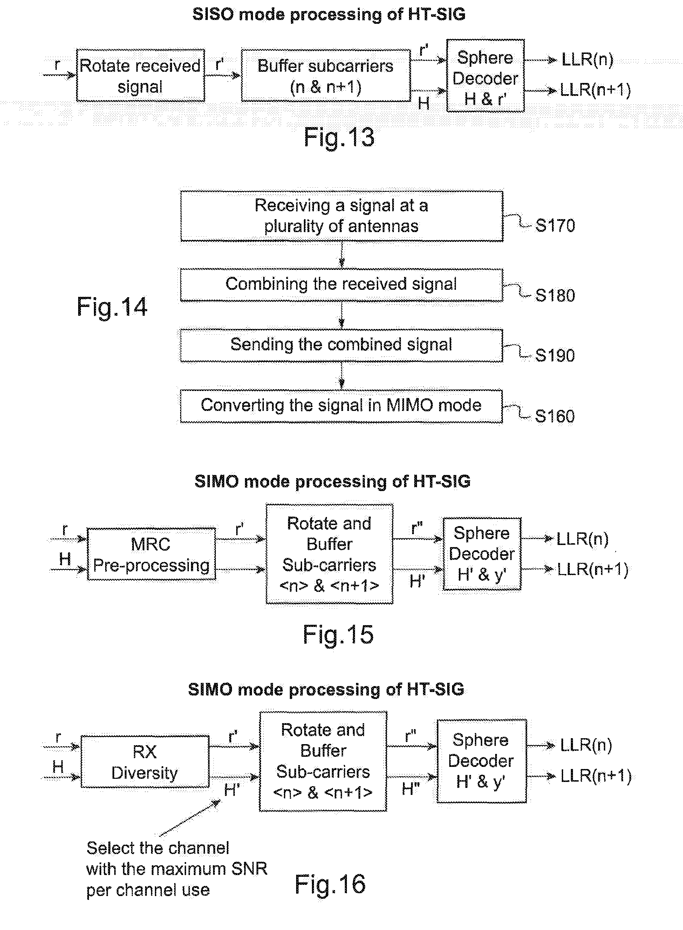

The method also encompasses a step S160 of converting the rotated signal in MIMO mode. According to the example of Figure 13 which is a block diagram of a RF receiver in case the signal is transmitted in SISO mode, this RF receiver comprises a demodulator. The RF receiver further comprises a processing unit. This processing unit comprises a rotating element and a converter element wherein the step S160 of converting is carried out. This converting step S160 may comprise buffering the signal. But in order to minimize memory requirements, buffering of neighbour subcarriers should be preferred. In addition, by considering that the interference terms are equal to zero, the demodulating step is achieved based on a diagonal matrix as effective channel between the transmitted signal and the received signal. Such an implementation is easy to carry out. Indeed, it is sufficient to state the coefficients $h_{12}$ and $h_{21}$ in the matrix used for the demodulation to 0. In this way, signal in SISO mode may be converted into signal in MIMO mode.

Thus, the method enables to obtain a signal which can be demodulated even if the signal is transmitted in SISO mode.

According to an alternative embodiment, the demodulator may operate in MIMO mode whereas the signal is transmitted in SIMO (acronym for "Single Input Multiple Output") mode.

In such case, the method for demodulating is the method according to Flowchart of Figure 14 comprises the step S 170 of receiving the signal modulated with a first modulation technique at a plurality of antennas. The method further comprises a step S180 of combining the received signal over the plurality of antennas at a pre-processing unit. The method then comprises a step S190 of sending the combined signal from the pre-processor to the processor, wherein the step S160 of converting is carried out.

Thus, the method enables to obtain a signal which can be demodulated even if the signal is transmitted in SIMO mode.

The step S180 of combining may be carried out in several ways. Notably, the step S 180 may be carried out by using the maximum-ratio combining method.

Such case may be further described by reference to Figure 15 which shows a block diagram of a RF receiver in case the signal is transmitted in SIMO mode. This RF receiver comprises a demodulator. According to the example of Figure 15, the demodulator is a sphere decoder. For the sake of clarity, the demodulator operates in a MIMO mode adapted for two transmitting antennas and two receiving antennas. The RF receiver further comprises a MRC (acronym for "maximum-ratio combining") pre-processing unit and a processing unit. MRC method may be used if the channel from the single transmit antenna to all receive antennas can be estimated in a previous step.

Figure 15 schematically illustrates the way the RF receiver operates, the matrix used when referring to equation 1 being:

$$x = \begin{bmatrix} x_1 \\ 0 \end{bmatrix} \qquad \text{(equation 9)}$$

$$H = \begin{bmatrix} h_{11} & 0 \\ h_{21} & 0 \end{bmatrix} \qquad \text{(equation 10)}$$

$$r = Hx + n = \begin{bmatrix} h_{1,1} * x1 \\ h_{2,1} * x1 \end{bmatrix} + n \qquad \text{(equation 11)}$$

wherein:

- X corresponds to the signal emitted by the first transmitting antenna,
- H corresponds to the effective channel in this case of a transmission in SIMO mode.

The MRC is implemented by multiplying the received signal by a matrix A whose coefficients are the following:

$$A = \begin{bmatrix} h_{1,1}* & h_{2,1}* \end{bmatrix} \quad \text{(equation 12)}$$

wherein:

- $h_{1,1}*$ is the conjugate of the matrix coefficient $h_{1,1}$,
- $h_{2,1}*$ is the conjugate of the matrix coefficient $h_{2,1}$.

Therefore, by using the fact that r' is equal to A x r, it can be found that:

$$r' = \left( h_{1,1}{}^2 + h_{2,1}{}^2 \right) \times s_1 + n \quad \text{(equation 13)}$$

r' is thus analogue to a signal in SISO mode. This implies that the signal obtained after the MRC pre-processing unit is analogue to a signal in SISO mode. By carrying out one of the method mentioned before for converting a SISO signal in a MIMO signal in the processing unit, it is possible to obtain a signal named r" in Figure 15 which is a MIMO signal. Such signal r" can be demodulated by the demodulator.

Therefore, according to figure 15, the signal r received in the SIMO mode is be demodulated so as to be able to obtain the signal originally transmitted. In addition, such method is easy to carry out.

Another way of implementing step S 180 is to use the receive diversity method. Such alternative may be further described by reference to Figure 16 which shows a block diagram of a RF receiver in case the signal is transmitted in SIMO mode. The RF receiver of Figure 16 is similar to the RF receiver of Figure 15, except that the MRC pre-processing unit is replaced by a receive diversity pre-processing unit. In this case, the receiving antenna with the best SNR for each signal is selected. There, again, the signal r' obtained after pre-processing is thus analogue to a signal in SISO mode

In both cases, the method enables to obtain a signal which can be demodulated even if the signal is transmitted in SIMO mode.

In every embodiment, the method may be performed in a radio-frequency receiver comprising antennas for receiving signals modulated in a first or a second phase modulation, the first phase modulation technique being based on a first phase constellation diagram and the second phase modulation technique being based on a second phase constellation diagram, the second phase constellation diagram being obtained by rotating the first phase constellation diagram by an angle being a non-nul integer multiple of 90 degrees. The radio-frequency device further comprises a demodulator adapted to demodulate signals modulated with a second phase modulation technique and a processing unit linked to the demodulator for rotating a signal modulated with the first phase modulation technique by said angle.

Such radio-frequency receiver may further comprise a detector unit that is adapted to detect if the signal is modulated with the first or the second phase modulation and a demultiplexer for separating the signal according to the modulation detected by the detector unit, the demultiplexer sending the signal to the processing unit in case the signal is modulated with the first phase modulation and to the demodulator in case the signal is modulated with the second phase modulation. Such configuration is easy to implement.

Further, in every embodiment, the method may be performed based on a computer program comprising instructions for performing the method. The program is executable on a programmable device. The application program may be implemented on a high-level procedural or object-oriented programming language, or in assembly or machine language if desired. In any case, the language may be compiled or interpreted language. The program may be a full installation program, or an update program. In the latter case, the program is an update program that updates a programmable device, previously programmed performing parts of the method, to a state wherein the device is suitable for performing the whole method.

The program may be recorded on a data storage medium. The data storage medium may be any memory adapted for recording computer instructions. The data storage medium may thus be any form of nonvolatile memory, including by way of example semiconductor memory devices, such as EPROM, EEPROM, and flash memory devices; magnetic disks such as internal hard disks and removable disks; magneto-optical disks; and CD-ROM disks.

The invention has been described with reference to preferred embodiments. However, many variations are possible within the scope of the invention.

APPENDICE I : TABLE OF ACRONYMS

| ACRONYMS | MEANING |
|---|---|
| AWGN | Additive white gaussian noise |
| BER | Bit-error rate |
| BPSK | Binary Phase-Shift Keying |
| EPROM | Erasable Programmable Read-Only Memory |
| EEPROM | Electrically Erasable Programmable Read-Only Memory |
| HT-SIG | High-throughout signal |
| LLR | Log-likelihood ratio |
| L-SIG | Legacy signal |
| LSB | Least significant Bit |
| LTE | Long Term Evolution |
| LUT | Look-up-table |
| MAC | Medium Access Control |
| MIMO | Multiple input multiple output |
| MISO | Multiple input Single Output |
| ML | Maximum-likelihood |
| MMSE | Minimum mean square error |
| MRC | Maximum-ratio combining |
| PHY | Physical Layer |
| PPDU | Protocol data unit |
| PRK | Phase reversal keying |
| PSK | Phase-Shift Keying |
| QAM | Quadrature amplitude modulation |
| SIMO | Single Input Multiple Output |
| SISO | Single Input Single Output |
| SNR | Signal-to-noise ratio |
| WiMax | Worldwide Interoperability for Microwave Access |
| WLAN | Wireless Local Area Network |
| ZF | Zero-forcing |

**Claims**

1. A method for demodulating a signal modulated with a first phase modulation technique with a demodulator adapted to demodulate signals modulated with a second phase modulation technique, the first phase modulation technique being based on a first phase constellation diagram and the second phase modulation technique being based on a second phase constellation diagram, the second phase constellation diagram being obtained by rotating the first phase constellation diagram by an angle being a non-nul integer multiple of 90 degrees, the method comprising:

    a) rotating the signal modulated with the first phase modulation technique by said angle; and
    b) demodulating the rotated signal with the demodulator.

**2.** The method according to claim 1, further comprising the steps of:

> i) receiving a signal to be demodulated;
> ii) verifying whether the signal is modulated with the first phase modulation technique;
> iii) applying steps a) and b) on the signal if the verification in step ii) is positive.

**3.** The method according to claim 2, further comprising the steps of:

> iv) applying step b) on the signal if the verification in step ii) is negative.

**4.** The method according to any one of claim 1 to 3, wherein the demodulator operates in MIMO mode and wherein the method further comprises the step of :

> - receiving the signal modulated with a first modulation technique at a single antenna,
> - sending the received signal from the single antenna to a processing unit,
> - converting the rotated signal in MIMO mode at the processing unit.

**5.** The method according to claim 4, wherein the converting step comprises buffering the signal and the demodulating step is achieved based on a diagonal matrix as effective channel between the transmitted signal and the received signal.

**6.** The method according to any one of claim 1 to 3, wherein the demodulator operates in MIMO mode and wherein the method further comprises the steps of :

> - receiving the signal modulated with a first modulation technique at a plurality of antennas,
> - combining the received signal over the plurality of antennas at a pre-processing unit,
> - sending the combined signal from the pre-processing unit to a processing unit,
> - converting the rotated signal in MIMO mode to the processing unit.

**7.** The method according to claim 6, wherein the combining step is achieved by using the maximum-ratio combining method or the receive diversity method.

**8.** The method according to any one of claim 1 to 7, wherein the first modulation technique is Q-BPSK and the second modulation technique is I-BPSK.

**9.** The method according to claim 8, wherein the rotating step is carried out by multiplying by -i.

**10.** The method according to any one of claims 1 to 9, wherein the signal is the HT-SIG field as defined according to the standard 802.11n for WLAN communication.

**11.** A computer program product comprising a computer readable medium, having thereon a computer program comprising program instructions, the computer program being loadable into a data-processing unit and adapted to cause execution of the method according to any of claims 1 to 10 when the computer program is run by the data-processing unit.

**12.** A radio-frequency receiver comprising:

> - antennas for receiving signals modulated in a first or a second phase modulation, the first phase modulation technique being based on a first phase constellation diagram and the second phase modulation technique being based on a second phase constellation diagram, the second phase constellation diagram being obtained by rotating the first phase constellation diagram by an angle being a non-nul integer multiple of 90 degrees,
> - a demodulator adapted to demodulate signals modulated with a second phase modulation technique,
> - a processing unit linked to the demodulator for rotating a signal modulated with the first phase modulation technique by said angle.

**13.** A radio-frequency receiver according to claim 12, wherein the radio-frequency receiver further comprises:

> - a detector unit is adapted to detect if the signal is modulated with the first or the second phase modulation,

- a demultiplexer for separating the signal according to the modulation detected by the detector unit, the demultiplexer sending the signal to the processing unit in case the signal is modulated with the first phase modulation and to the demodulator in case the signal is modulated with the second phase modulation.

14. The radio-frequency receiver according to any one of claims 12 or 13, wherein the processing unit is adapted to carry out the method according to any one of claims 1 to 10.

**Amended claims in accordance with Rule 137(2) EPC.**

1. A method for demodulating a signal, at least a first signal field being modulated with a first phase modulation technique and at least a second signal field being modulated with a second phase modulation technique, with a demodulator adapted to demodulate signals modulated with said second phase modulation technique, the first phase modulation technique being based on a first phase constellation diagram and the second phase modulation technique being based on a second phase constellation diagram, the second phase constellation diagram being obtained by rotating the first phase constellation diagram by an angle being a non-nul integer multiple of 90 degrees, the method comprising:

    a) rotating said first signal field modulated with the first phase modulation technique by said angle; and
    b) demodulating the rotated signal with the demodulator.

2. The method according to claim 1, further comprising the steps of:

    i) receiving a signal to be demodulated;
    ii) verifying which signal fields are modulated with the first phase modulation technique;
    iii) applying steps a) and b) on the signal fields for which the verification in step ii) is positive.

3. The method according to claim 2, further comprising the steps of:

    iv) applying only step b) on the signal fields for which the verification in step ii) is negative.

4. The method according to any of preceding claims, wherein:

    - the part of said signal modulated with the first phase modulation technique is smaller than the part of said signal modulated with the second phase modulation technique.

5. The method according to any one of claim 1 to 4, wherein the demodulator operates in MIMO mode and wherein the method further comprises the step of:

    - receiving the signal modulated with a first modulation technique at a single antenna,
    - sending the received signal from the single antenna to a processing unit,
    - converting the rotated signal in MIMO mode at the processing unit.

6. The method according to claim 5, wherein the converting step comprises buffering the signal and the demodulating step is achieved based on a diagonal matrix as effective channel between the transmitted signal and the received signal.

7. The method according to any one of claim 1 to 4, wherein the demodulator operates in MIMO mode and wherein the method further comprises the steps of :

    - receiving the signal modulated with a first modulation technique at a plurality of antennas,
    - combining the received signal over the plurality of antennas at a pre-processing unit,
    - sending the combined signal from the pre-processing unit to a processing unit,
    - converting the rotated signal in MIMO mode to the processing unit.

8. The method according to claim 7, wherein the combining step is achieved by using the maximum-ratio combining method or the receive diversity method.

**9.** The method according to any one of claim 1 to 8, wherein the first modulation technique is Q-BPSK and the second modulation technique is I-BPSK.

**10.** The method according to claim 9, wherein the rotating step is carried out by multiplying by -i.

**11.** The method according to any one of claims 1 to 10, wherein the signal is the HT-SIG field as defined according to the standard 802.11n for WLAN communication.

**12.** A computer program product comprising a computer readable medium, having thereon a computer program comprising program instructions, the computer program being loadable into a data-processing unit and adapted to cause execution of the method according to any of claims 1 to 11 when the computer program is run by the data-processing unit.

**13.** A radio-frequency receiver comprising:

- antennas for receiving signals modulated in a first or a second phase modulation, the first phase modulation technique being based on a first phase constellation diagram and the second phase modulation technique being based on a second phase constellation diagram, the second phase constellation diagram being obtained by rotating the first phase constellation diagram by an angle being a non-nul integer multiple of 90 degrees,
- a demodulator adapted to demodulate signals modulated with a second phase modulation technique,
- a processing unit linked to the demodulator for rotating a signal modulated with the first phase modulation technique by said angle.

**14.** A radio-frequency receiver according to claim 13, wherein the radio-frequency receiver further comprises:

- a detector unit is adapted to detect if the signal is modulated with the first or the second phase modulation,
- a demultiplexer for separating the signal according to the modulation detected by the detector unit, the demultiplexer sending the signal to the processing unit in case the signal is modulated with the first phase modulation and to the demodulator in case the signal is modulated with the second phase modulation.

**15.** The radio-frequency receiver according to any one of claims 13 or 14, wherein the processing unit is adapted to carry out the method according to any one of claims 1 to 11.

BPSK

Fig.1

Q-BPSK

Fig.2

Fig.3

Fig.4

## Fig.5

Format of Data field
(non LDPC case only)

| SERVICE 16 bits | Scrambled PSDU | 6-$N_{ES}$ Tail bits | Pad bits |
|---|---|---|---|

### Non-HT PPDU

| 8µs | 8µs | 4µs | |
|---|---|---|---|

| L-STF | L-LTF | L-SIG | Data |
|---|---|---|---|

packet 1

### HT-mixed format PPDU

| 8µs | 8µs | 4µs | 8µs | 4µs | Data HT-LTFs 4µs per LTF | Extension HT-LTFs 4µs per LTF |
|---|---|---|---|---|---|---|

packet 2

| L-STF | L-LTF | L-SIG | HT-SIG | HT-STF | HT-LTF | ••• | HT-LTF | HT-LTF | ••• | HT-LTF | Data |
|---|---|---|---|---|---|---|---|---|---|---|---|

### HT-greenfield format PPDU

| 8µs | 8µs | 8µs | Data HT-LTFs 4µs per LTF | Extension HT-LTFs 4µs per LTF |
|---|---|---|---|---|

packet 3

| HT-GF-STF | HT-LTF1 | HT-SIG | HT-LTF | ••• | HT-LTF | HT-LTF | ••• | HT-LTF | Data |
|---|---|---|---|---|---|---|---|---|---|

Fig.6

Fig.7

Fig.8

Fig.9

## Fig.10

## Fig.11

Receiving a signal — S100

Checking whether the signal is modulated with the first phase modulation — S110

Rotating the signal — S120

Demodulating — S130

## Fig.12

Receiving a signal at one antenna — S140

Sending to a processing unit — S150

Converting the signal in MIMO mode — S160

## SISO mode processing of HT-SIG

$r$ → Rotate received signal → $r'$ → Buffer subcarriers (n & n+1) → $r'$ / H → Sphere Decoder H & $r'$ → LLR(n), LLR(n+1)

Fig.13

Receiving a signal at a plurality of antennas — S170

Combining the received signal — S180

Sending the combined signal — S190

Converting the signal in MIMO mode — S160

Fig.14

## SIMO mode processing of HT-SIG

$r$ / H → MRC Pre-processing → $r'$ → Rotate and Buffer Sub-carriers <n> & <n+1> → $r''$ / H' → Sphere Decoder H' & y' → LLR(n), LLR(n+1)

Fig.15

## SIMO mode processing of HT-SIG

$r$ / H → RX Diversity → $r'$ / H' → Rotate and Buffer Sub-carriers <n> & <n+1> → $r''$ / H'' → Sphere Decoder H' & y' → LLR(n), LLR(n+1)

Select the channel with the maximum SNR per channel use

Fig.16

Europäisches
Patentamt

European
Patent Office

Office européen
des brevets

**EUROPEAN SEARCH REPORT**

Application Number

EP 11 17 4261

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/110348 A1 (LEE DAE WON [KR] ET AL) 12 May 2011 (2011-05-12) * abstract * * paragraph [0008] - paragraph [0014] * * paragraph [0017] - paragraph [0027] * * paragraph [0041] - paragraph [0102] * ----- | 1-14 | INV. H04L27/00 H04L27/18 H04L27/38 |
| X | US 2011/150148 A1 (SON JUNG-BO [KR] ET AL) 23 June 2011 (2011-06-23) * abstract * * paragraph [0003] - paragraph [0065] * ----- | 1-14 | |
| X | US 2011/096685 A1 (LEE IL-GU [KR] ET AL) 28 April 2011 (2011-04-28) * abstract * * paragraph [0003] - paragraph [0193] * ----- | 1-14 | |
| X | US 2007/047666 A1 (TRACHEWSKY JASON A [US]) 1 March 2007 (2007-03-01) * abstract * * paragraph [0007] - paragraph [0101] * ----- | 1-14 | TECHNICAL FIELDS SEARCHED (IPC) H04L |

The present search report has been drawn up for all claims

| Place of search | Date of completion of the search | Examiner |
|---|---|---|
| The Hague | 8 December 2011 | Dhibi, Youssef |

EPO FORM 1503 03.82 (P04C01)

**ANNEX TO THE EUROPEAN SEARCH REPORT
ON EUROPEAN PATENT APPLICATION NO.**

EP 11 17 4261

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2011

| Patent document cited in search report | | Publication date | Patent family member(s) | | Publication date |
|---|---|---|---|---|---|
| US 2011110348 | A1 | 12-05-2011 | NONE | | |
| US 2011150148 | A1 | 23-06-2011 | NONE | | |
| US 2011096685 | A1 | 28-04-2011 | NONE | | |
| US 2007047666 | A1 | 01-03-2007 | US | 2007047666 A1 | 01-03-2007 |
| | | | US | 2010220798 A1 | 02-09-2010 |

EPO FORM P0459

For more details about this annex : see Official Journal of the European Patent Office, No. 12/82